# EUROPÄISCHE PATENTSCHRIFT

(11) **EP 3 503 356 B1**
(45) Veröffentlichungstag und Bekanntmachung des Hinweises auf die Patenterteilung: **07.10.2020**
(21) Anmeldenummer: 18207736.2
(22) Anmeldetag: 22.11.2018
(51) Int. Cl.: H02K 5/20, H02K 9/197, H02K 1/32

(54) **KÜHLMITTELVERTEILER FÜR EINE MASCHINENANORDNUNG SOWIE ENTSPRECHENDE MASCHINENANORDNUNG**
COOLANT DISTRIBUTOR FOR A MACHINE ASSEMBLY AND CORRESPONDING MACHINE ASSEMBLY
DISTRIBUTEUR DE LIQUIDE DE REFROIDISSEMENT POUR UN ENSEMBLE DE MACHINE AINSI QU'ENSEMBLE DE MACHINE CORRESPONDANT

(30) Priorität: 21.12.2017 DE 102017223490
(43) Veröffentlichungstag der Anmeldung: 26.06.2019
(73) Patentinhaber: AUDI AG, 85045 Ingolstadt (DE); Audi Hungaria ZRT, 9027 Gyõr (HU)
(72) Erfinder: Cox, Jason, 85049 Ingolstadt (DE); Pohlmann, Axel, 85134 Stammham (DE); Zucknik, Stefan, 85053 Ingolstadt (DE); Barany, Zsolt, 9027 Györ (HU)

(56) Entgegenhaltungen:
- DE-A1- 10 318 022
- FR-A1- 3 004 601

## Beschreibung

Die Erfindung betrifft einen Kühlmittelverteiler für eine Maschinenanordnung mit den Merkmalen des Oberbegriffs des Anspruchs 1 sowie eine korrespondierende Maschinenanordnung.

Aus dem Stand der Technik ist beispielsweise die Druckschrift DE 10 2008 001 607 A1 bekannt. Diese betrifft eine elektrische Maschine für ein Fahrzeug, insbesondere Kraftfahrzeug, die einen Rotor mit einer Rotorwelle aufweist und eine Kühlmittel aufweisende Kühleinrichtung besitzt. Es ist vorgesehen, dass die Rotorwelle als eine Innenwand aufweisende, von Kühlmittel durchströmte Hohlwelle ausgebildet ist, die in ihrem Inneren mindestens ein mit der Innenwand der Hohlwelle verbundenes, durch seine mit der Hohlwelle erfolgende Rotation förderndes Kühlmittelförderelement aufweist.

Weiterhin beschreibt die Druckschrift DE 10 2011 015 623 A1 eine elektrische Antriebseinheit für ein Kraftfahrzeug, die eine elektrische Maschine und einen Schmier- und Kühlkreislauf aufweist. Der Schmier- und Kühlkreislauf umfasst ein wässriges Schmiermittel, das zumindest durch einen Innenraum der elektrischen Maschine geführt ist, um Teile der elektrischen Maschine in dem Innenraum zu kühlen.

Aus dem Stand der Technik ist weiterhin die Druckschrift DE 103 18 022 A1 bekannt. Diese beschreibt eine elektrische Maschine und eine Antriebsachse mit mindestens einer darin angeordneten elektrischen Maschine. Die elektrische Maschine verfügt über einen Rotor und einen Stator. Um die Kühlung der elektrischen Maschine beziehungsweise der Antriebsachse mit der darin angeordneten elektrischen Maschine zu verbessern, ist eine mit dem Rotor verbundene Rotorwelle mit einem Axialkanal vorgesehen, der sich axial zumindest in den Bereich einer Lagerstelle der Rotorwelle und zumindest teilweise in den Bereich des Rotors hinein erstreckt und der als Kühlmittelkanal für ein Kühlfluid vorgesehen ist. Der Axialkanal kann als zentrische Sackbohrung ausgebildet sein, in der ein Rohr konzentrisch angeordnet ist. Der Rohrinnenraum steht mit dem Axialkanal in Strömungsverbindung. Zudem zeigt die Druckschrift FR 3 004 601 A1 eine elektrische Maschine mit einer internen Kühlung.

Es ist Aufgabe der Erfindung, einen Kühlmittelverteiler für eine Maschinenanordnung vorzuschlagen, welcher gegenüber bekannten Kühlmittelverteilern Vorteile aufweist, insbesondere einfach und kostengünstig herstellbar ist und zudem eine optimale Strömungsführung ermöglicht.

Dies wird erfindungsgemäß mit einem Kühlmittelverteiler für eine Maschinenanordnung mit den Merkmalen des Anspruchs 1 erreicht. Dabei ist vorgesehen, dass der Verteilerkörper aus zwei Gleichteilen zusammengesetzt ist, die die Vorlaufkammer und die Rücklaufkammer zwischen sich ausbilden.

Grundsätzlich ist es vorgesehen, dass in einem Verteilerkörper des Kühlmittelverteilers wenigstens eine Kühlmittelvorlaufleitung zum Zuführen eines Kühlmittelvorlaufstroms und wenigstens eine Kühlmittelrücklaufauslassöffnung zum Austragen eines Kühlmittelrücklaufstroms sowie mehrere Kühlmittelvorlaufauslassöffnungen und mehrere Kühlmittelrücklaufeinlassöffnungen ausgebildet sind, wobei die Kühlmittelvorlaufeinlassöffnung über eine in dem Verteilerkörper vorliegende Vorlaufkammer an die Kühlmittelvorlaufauslassöffnungen und die Kühlmittelrücklaufeinlassöffnungen über eine Rücklaufkammer an die Kühlmittelrücklaufauslassöffnung strömungstechnisch angeschlossen sind und die Kühlmittelvorlaufeinlassöffnung innerhalb des Verteilerkörpers strömungstechnisch von der Kühlmittelrücklaufauslassöffnung strömungstechnisch separiert ist. Hierbei ist vorgesehen, dass der Kühlmittelvorlaufstrom innerhalb des Verteilerkörpers auf mehrere Kühlmittelteilströme aufgeteilt wird, die den Kühlmittelvorlaufauslassöffnungen zugeführt werden und dass dem Verteilerkörper über die Kühlmittelrücklaufeinlassöffnungen zugeführte Kühlmittelteilströme innerhalb des Verteilerkörpers zu dem Kühlmittelrücklaufstrom zusammengefasst werden.

Der Kühlmittelverteiler bildet einen Bestandteil der Maschinenanordnung und dient dem Verteilen von Kühlmittel innerhalb der Maschinenanordnung. Die Maschinenanordnung weist vorzugsweise mehrere elektrische Maschinen, beispielsweise eine erste elektrische Maschine und eine zweite elektrische Maschine, auf. Die beiden elektrischen Maschinen liegen besonders bevorzugt als Traktionsmaschinen für ein Kraftfahrzeug vor, sodass die Maschinenanordnung alternativ auch als Antriebsmaschinenanordnung oder als Traktionsmaschinenanordnung bezeichnet werden kann. In diesem Fall dient die Maschinenanordnung dem Antreiben eines Kraftfahrzeugs, also dem Bereitstellen eines auf das Antreiben des Kraftfahrzeugs gerichteten Drehmoments.

Während eines Betriebs der Maschinenanordnung fällt in dieser Wärme an, welche zumindest zeitweise abgeführt werden soll beziehungsweise abgeführt wird. Hierzu wird der Maschinenanordnung ein Kühlmittel zugeführt, welches bei einem Durchströmen der Maschinenanordnung Wärme aufnimmt und aus ihr abführt. Zum Aufteilen beziehungsweise Verteilen des Kühlmittels innerhalb der Maschinenanordnung, insbesondere dem Aufteilen des Kühlmittels auf die elektrischen Maschinen der Maschinenanordnung, ist der Kühlmittelverteiler vorgesehen. Dieser nimmt also einen Kühlmittelvorlaufstrom an Kühlmittel entgegen und teilt diesen in mehrere Kühlmittelteilströme auf. Diese Kühlmittelteilströme werden den einzelnen elektrischen Maschinen der Maschinenanordnung zugeführt.

Nach dem Durchströmen der elektrischen Maschinen werden die Kühlmittelteilströme erneut dem Kühlmittelverteiler zugeführt, welcher diese zusammenfasst, nämlich zu einem Kühlmittelrücklaufstrom. Das bedeutet schlussendlich, dass dem Kühlmittelverteiler ein einziger Kühlmittelstrom, nämlich der Kühlmittelvorlaufstrom, zugeführt und auch nur ein einziger Kühlmittelstrom, nämlich der Kühlmittelrücklaufstrom, entnommen wird. Das Verteilen des Kühlmittels auf die einzelnen Kühlmittelteilströme beziehungsweise die elektrischen Maschinen der Maschinenanordnung sowie das nachfolgende Zusammenfassen der Kühlmittelteilströme zu dem Kühlmittelrücklaufstrom erfolgt mithilfe des Kühlmittelverteilers.

Der Kühlmittelverteiler weist zu diesem Zweck den Verteilerkörper auf, in welchem die Kühlmittelvorlaufeinlassöffnung, die Kühlmittelrücklaufauslassöffnung, die Kühlmittelvorlaufauslassöffnungen und die Kühlmittelrücklaufeinlassöffnungen ausgebildet sind. Über die Kühlmittelvorlaufeinlassöffnung wird dem Kühlmittelverteiler beziehungsweise dem Verteilerkörper der Kühlmittelvorlaufstrom zugeführt. Anschließend wird der Kühlmittelvorlaufstrom innerhalb des Verteilerkörpers auf die Kühlmittelteilströme aufgeteilt, welche den Kühlmittelvorlaufauslassöffnungen zugeführt werden. Bevorzugt wird jeder der Kühlmittelvorlaufauslassöffnungen einer der Kühlmittelteilströme zugeführt.

Die Kühlmittelvorlaufauslassöffnungen sind voneinander beabstandet an dem Verteilerkörper angeordnet beziehungsweise beabstandet voneinander in ihm ausgebildet, sodass die Kühlmittelteilströme nach dem Verteilerkörper geometrisch voneinander getrennt verlaufen. Nach dem Kühlen der Maschinenanordnung werden die Kühlmittelteilströme über die Kühlmittelrücklaufeinlassöffnungen erneut dem Kühlmittelverteiler beziehungsweise seinem Verteilerkörper zugeführt. Vorzugsweise wird dabei jeder der Kühlmittelrücklaufeinlassöffnungen einer der Kühlmittelteilströme zugeführt. Innerhalb des Verteilerkörpers werden die Kühlmittelteilströme zusammengefasst, nämlich zu dem Kühlmittelrücklaufstrom. Der Kühlmittelrücklaufstrom wird anschließend an der Kühlmittelrücklaufauslassöffnung zum Entnehmen bereitgestellt beziehungsweise durch die Kühlmittelrücklaufauslassöffnung aus dem Verteilerkörper ausgetragen.

Zur Realisierung der beschriebenen Funktionalität dienen die Vorlaufkammer und die Rücklaufkammer. Über die Vorlaufkammer ist die Kühlmittelvorlaufeinlassöffnung strömungstechnisch mit den mehreren Kühlmittelvorlaufauslassöffnungen verbunden. Umgekehrt sind über die Rücklaufkammer die mehreren Kühlmittelrücklaufeinlassöffnungen mit der Kühlmittelrücklaufauslassöffnung strömungsverbunden. Innerhalb des Verteilerkörpers verlaufen der Kühlmittelvorlaufstrom und der Kühlmittelrücklaufstrom strömungstechnisch getrennt voneinander. Hierzu sind die Vorlaufkammer und die Rücklaufkammer innerhalb des Verteilerkörpers geometrisch beabstandet voneinander ausgebildet, sodass sie strömungstechnisch voneinander getrennt sind.

Entsprechend ist auch die Kühlmittelvorlaufeinlassöffnung von der Kühlmittelrücklaufauslassöffnung innerhalb des Verteilerkörpers strömungstechnisch getrennt beziehungsweise separiert. Eine Strömungsverbindung zwischen der Kühlmittelvorlaufeinlassöffnung und der Kühlmittelrücklaufauslassöffnung liegt also zumindest nicht über den Kühlmittelverteiler beziehungsweise den Verteilerkörper und entsprechend auch nicht über die Vorlaufkammer und die Rücklaufkammer vor, sondern kann allenfalls außerhalb des Kühlmittelverteilers realisiert sein. So stehen die Kühlmittelvorlaufeinlassöffnung und die Kühlmittelrücklaufauslassöffnung zum Kühlen der Maschinenanordnung über die elektrischen Maschinen der Maschinenanordnung miteinander in Strömungsverbindung.

Um eine möglichst einfache und kostengünstige Herstellung des Kühlmittelverteilers zur realisieren, setzt sich der Verteilerkörper aus zwei Gleichteilen zusammen, also aus zwei Elementen, welche identisch zueinander ausgebildet sind. Bevorzugt werden die zwei Gleichteile in unterschiedliche Orientierungen gebracht und zu dem Verteilerkörper zusammengesetzt. Das bedeutet beispielsweise, dass die beiden Gleichteile in einer gedachten Ebene, welche auch als Kontaktebene bezeichnet werden kann, aneinander anliegen, und dass die beiden Gleichteile bezüglich dieser gedachten Ebene symmetrisch miteinander ausgebildet sind.

Dies wird beispielsweise umgesetzt, indem die beiden Gleichteile identisch ausgebildet beziehungsweise hergestellt werden. Anschließend wird eines der Gleichteile umgedreht, insbesondere um 180° gedreht, und mit dem jeweils anderen der Gleichteile zu dem Verteilerkörper verbunden. Zum Herstellen des Verteilerkörpers werden die beiden Gleichteile vorzugsweise aneinander befestigt, nämlich insbesondere strömungstechnisch dicht aneinander befestigt. Dieses Befestigen kann grundsätzlich beliebig erfolgen, beispielsweise ist ein formschlüssiges und/oder ein stoffschlüssiges Befestigen der beiden Gleichteile aneinander umgesetzt. Das stoffschlüssige Befestigen wird beispielsweise durch Verkleben und/oder Verschweißen der Gleichteile realisiert.

Um die Herstellung des Verteilerkörpers weiter zu vereinfachen, sollen die beiden Gleichteile die Vorlaufkammer und die Rücklaufkammer zwischen sich ausbilden. Das bedeutet schlussendlich, dass sowohl die Vorlaufkammer als auch die Rücklaufkammer einerseits von einem der Gleichteile und andererseits von dem jeweils anderen der Gleichteile begrenzt ist. Hierzu werden die Vorlaufkammer und die Rücklaufkammer jeweils randoffen und jeweils zum Teil in den beiden Gleichteilen ausgebildet. Die Vorlaufkammer und die Rücklaufkammer setzen sich also jeweils aus einer Vertiefung des einen der Gleichteile und einer Vertiefung des jeweils anderen der Gleichteile zusammen.

Beispielsweise werden diese Vertiefungen originär mit den Gleichteilen ausgebildet, beispielsweise während eines Gießvorgangs, bei welchem die Gleichteile hergestellt werden. Es kann jedoch auch vorgesehen sein, die Vertiefungen nach dem Ausbilden der Gleichteile, wiederum beispielsweise mittels Gießen, in den Gleichteilen auszubilden, vorzugsweise durch spanabhebendes Bearbeiten, besonders bevorzugt durch Fräsen.

Beide Vorgehensweisen ermöglichen einen hohen Freiheitsgrad bei der Gestaltung der Vorlaufkammer und der Rücklaufkammer. Die Ausbildung des Verteilerkörpers aus symmetrisch zueinander ausgestalteten Gleichteilen ermöglicht somit zum einen eine einfache und kostengünstige Herstellung und zum anderen eine optimale Strömungsführung des Kühlmittels durch den Verteilerkörper.

Eine weitere Ausgestaltung der Erfindung sieht vor, dass der Verteilerkörper eine bezüglich einer Längsmittelachse des Verteilerkörpers zentrale Hohlwellendurchtrittsöffnung aufweist, an die sich in radialer Richtung nach außen die Kühlmittelrücklaufeinlassöffnungen anschließen. Die Längsmittelachse des Verteilerkörpers fällt bevorzugt mit einer Drehachse des Kühlmittelverteilers zusammen, um welche dieser drehbar in der Maschinenanordnung gelagert ist. Beispielsweise ist der Kühlmittelverteiler mit Antriebswellen der elektrischen Maschine unmittelbar verbunden. Diese Antriebswellen liegen vorzugsweise als Hohlwellen vor. Entsprechend ist die Hohlwellendurchtrittsöffnung zur Aufnahme der Antriebswelle beziehungsweise der Antriebswellen ausgestaltet.

Die Hohlwellendurchtrittsöffnung durchgreift vorzugsweise den Verteilerkörper in axialer Richtung bezüglich der Längsmittelachse vollständig. Aufgrund der symmetrischen Ausgestaltung der Gleichteile liegt sie in beiden Gleichteilen vor. An die Hohlwellendurchtrittsöffnung schließen sich die Kühlmittelrücklaufeinlassöffnungen an. Bei nichtmontiertem Kühlmittelverteiler, also wenn in der Hohlwellendurchtrittsöffnung keine Welle angeordnet ist, ist es vorzugsweise vorgesehen, dass die Kühlmittelrücklaufeinlassöffnungen zu der Hohlwellendurchtrittsöffnung in radialer Richtung randoffen ausgebildet sind.

Eine strömungstechnische Separierung der Hohlwellendurchtrittsöffnung von den Kühlmittelrücklaufeinlassöffnungen wird insoweit schlussendlich durch die Anordnung der Hohlwelle beziehungsweise der Hohlwellen in der Hohlwellendurchtrittsöffnung erzielt. In jedem der Gleichteile ist eine der Kühlmittelrücklaufeinlassöffnungen ausgebildet. Die beschriebene Ausgestaltung ermöglicht wiederum eine einfache Herstellung des Verteilerkörpers des Kühlmittelverteilers.

Im Rahmen einer weiteren Ausführungsform der Erfindung kann vorgesehen sein, dass die Kühlmittelrücklaufeinlassöffnungen in Umfangsrichtung bezüglich der Längsmittelachse des Verteilerkörpers jeweils beidseitig begrenzt sind. In anderen Worten umgreift jede der Kühlmittelrücklaufeinlassöffnungen die Längsmittelachse in Umfangsrichtung nur teilweise. Beispielsweise erstrecken sich die Kühlmittelrücklaufeinlassöffnungen in Umfangsrichtung bezüglich der Längsmittelachse über höchstens 45°, höchstens 90°, höchstens 135°, höchstens 180° oder höchstens 225°. Dies ermöglicht auf einfache Art und Weise eine strömungstechnische Trennung der Vorlaufkammer und der Rücklaufkammer voneinander innerhalb des Verteilerkörpers.

Eine bevorzugte Ausgestaltung der Erfindung sieht vor, dass die Kühlmittelrücklaufeinlassöffnungen in unterschiedlichen der Gleichteile ausgebildet sind. Hierauf wurde vorstehend bereits hingewiesen. Üblicherweise ist in jedem der Gleichteile dieselbe Anzahl an Kühlmittelrücklaufeinlassöffnungen ausgebildet wie in jedem anderen der Gleichteile. In anderen Worten sind die Kühlmittelrücklaufeinlassöffnungen gleichmäßig auf die Gleichteile verteilt, nicht zuletzt um deren Ausgestaltung als Gleichteile zu ermöglichen. Wiederum dient eine solche Ausführungsform also der einfachen und kostengünstigen Herstellung des Kühlmittelverteilers.

Eine weitere bevorzugte Ausführungsform der Erfindung sieht vor, dass die Kühlmittelvorlaufeinlassöffnung sich aus mehreren Kühlmittelvorlaufeinlassöffnungsteilen zusammensetzt, die beabstandet voneinander in unterschiedlichen der Gleichteile jeweils randgeschlossen ausgebildet sind, wobei die Kühlmittelvorlaufeinlassöffnungsteile Mantelflächen der Gleichteile durchgreifen. Die Aufteilung der Kühlmittelvorlaufeinlassöffnung in die mehreren Kühlmittelvorlaufeinlassöffnungsteile dient der einfachen strömungstechnischen Anschließbarkeit des Kühlmittelverteilers bei gleichzeitig ausreichendem Durchströmungsquerschnitt der Kühlmittelvorlaufeinlassöffnung. Die Aufteilung ermöglicht eine zuverlässige strömungstechnische Trennung zwischen Kühlmittelvorlaufeinlassöffnung und Kühlmittelrücklaufauslassöffnung. In jedem der Gleichteile ist dieselbe Anzahl an Kühlmittelvorlaufeinlassöffnungsteilen ausgebildet.

Bei aneinander montierten Gleichteilen, also an dem fertigen Verteilerkörper, liegen die Kühlmittelvorlaufeinlassöffnungsteile beabstandet voneinander vor. Zudem sind die Kühlmittelvorlaufeinlassöffnungsteile jeweils in den Gleichteilen randgeschlossen ausgebildet. Das bedeutet, dass die Kühlmittelvorlaufeinlassöffnungsteile auch bei voneinander beabstandet angeordneten Gleichteilen randoffen in diesen vorliegen und nicht erst durch das Zusammenfügen der Gleichteile zu dem Verteilerkörper eine randgeschlossene Gestalt annehmen. Unter der randgeschlossenen Ausgestaltung ist zu verstehen, dass ein umlaufender, also durchgehender Rand vorliegt, welcher jede der Kühlmittelvorlaufeinlassöffnungsteile vollständig umgreift.

Jedes der Gleichteile weist eine Mantelfläche auf, welche das jeweilige Gleichteil in radialer Richtung nach außen begrenzt. Beispielsweise sind die Gleichteile jeweils zylinderförmig, insbesondere kreiszylinderförmig, ausgestaltet und weisen insoweit zwei vorzugsweise ebene Grundflächen auf, welche in radialer Richtung außenseitig von der entsprechenden Mantelfläche miteinander verbunden sind. In der Mantelfläche jedes der Gleichteile soll nun wenigstens eine der Kühlmittelvorlaufeinlassöffnungsteile vorliegen, die entsprechende Mantelfläche also durchgreifen, nämlich randgeschlossen durchgreifen. Die Anordnung der Kühlmittelvorlaufeinlassöffnung beziehungsweise der Kühlmittelvorlaufeinlassöffnungsteile in den Mantelflächen ermöglicht ein einfaches strömungstechnisches Anschließen des Kühlmittelverteilers an eine Kühlmittelversorgung.

Eine Weiterbildung der Erfindung sieht vor, dass die Kühlmittelrücklaufauslassöffnung in axialer Richtung gesehen zwischen den Kühlmittelvorlaufeinlassöffnungsteilen angeordnet ist und jeweils teilweise in den Gleichteilen randoffen ausgebildet ist, wobei die Kühlmittelrücklaufauslassöffnung die Mantelflächen der Gleichteile durchgreift. Die Ausbildung der Kühlmittelrücklaufauslassöffnung in der Mantelfläche der Gleichteile erfolgt derart, dass sie in axialer Richtung zwischen den Kühlmittelvorlaufeinlassöffnungsteilen vorliegt, ermöglicht ein einfaches Anschließen des Kühlmittelverteilers an eine Kühlmittelversorgung. Beispielsweise liegt dabei ein Verbindungsteil der Kühlmittelversorgung durchgehend an den Mantelflächen der Gleichteile an und weist zwei mit dem Kühlmittelvorlaufeinlassöffnungsteilen strömungsverbundene Ausnehmungen und eine dazwischen liegende, mit der Kühlmittelrücklaufauslassöffnung strömungsverbundene Ausnehmung auf.

Es sei darauf hingewiesen, dass die Kühlmittelrücklaufauslassöffnung nur in axialer Richtung gesehen zwischen den Kühlmittelvorlaufeinlassöffnungsteilen vorliegen soll. Es ist hierzu nicht notwendig und - bevorzugt - auch nicht vorgesehen, dass die Kühlmittelrücklaufauslassöffnung und die Kühlmittelvorlaufeinlassöffnungsteile in Umfangsrichtung überlappend angeordnet sind. Vielmehr sind sie bevorzugt in Umfangsrichtung beabstandet voneinander ausgebildet.

Eine weiter bevorzugte Ausgestaltung der Erfindung sieht vor, dass die Rücklaufkammer sich im radialen Verlauf ausgehend von den Kühlmittelrücklaufeinlassöffnungen hin zu der Kühlmittelrücklaufauslassöffnung in Umfangsrichtung aufweitet. Die Kühlmittelrücklaufeinlassöffnungen sind also in radialer Richtung gesehen weiter innenliegend als die Kühlmittelrücklaufauslassöffnung angeordnet, welche umgekehrt weiter außenliegend als die Kühlmittelrücklaufeinlassöffnungen vorliegt. Die Kühlmittelrücklaufeinlassöffnungen einerseits und die Kühlmittelrücklaufauslassöffnung sind über die Rücklaufkammer strömungstechnisch miteinander verbunden. Bevorzugt ist die Kühlmittelrücklaufauslassöffnung durch ein Durchgreifen der Mantelfläche der Gleichteile durch die Rücklaufkammer ausgebildet.

Durch das Aufweiten der Rücklaufkammer in radialer Richtung derart, dass sie in radialer Richtung nach außen größer wird, nämlich eine größer werdende Erstreckung in Umfangsrichtung aufweist, ist eine besonders vorteilhafte Strömungsführung des Kühlmittels mit besonders geringen Druckverlusten realisiert. Es kann vorgesehen sein, dass die Rücklaufkammer sich in radialer Richtung nach außen ausgehend von den Kühlmittelrücklaufeinlassöffnungen bis hin zu der Kühlmittelrücklaufauslassöffnung durchgehend aufweitet, also kontinuierlich größer wird. Es kann jedoch auch vorgesehen sein, dass zunächst eine Aufweitung der Rücklaufkammer ausgehend von den Kühlmittelrücklaufeinlassöffnungen vorliegt und sich anschließend die Rücklaufkammer in Umfangsrichtung wieder verkleinert.

Bevorzugt ist jedoch stets die Kühlmittelrücklaufauslassöffnung in Umfangsrichtung im Winkelmaß größer als die Kühlmittelrücklaufeinlassöffnungen oder zumindest genauso groß. Besonders bevorzugt ist die Rücklaufkammer derart ausgestaltet, dass durch eine Drehbewegung des Kühlmittelverteilers beziehungsweise des Verteilerkörpers um die Drehachse beziehungsweise die Längsmittelachse eine Förderwirkung auf das Kühlmittel bewirkt wird, welches dieses in Richtung der Kühlmittelrücklaufauslassöffnung drängt.

Eine weitere, besonders bevorzugte Ausführungsform der Erfindung sieht vor, dass in der Rücklaufkammer ein Strömungsführungselement angeordnet ist, das in axialer Richtung an beiden Gleichteilen anliegt und sich von den Kühlmittelrücklaufeinlassöffnungen bis hin zu der Kühlmittelrücklaufauslassöffnung erstreckt, sodass ein Teil der Rücklaufkammer strömungstechnisch von den Kühlmittelrücklaufeinlassöffnungen separiert ist. Das Strömungsführungselement sorgt für eine Reduzierung des Strömungswiderstands beziehungsweise des Druckverlusts des Kühlmittels bei einem Durchströmen der Rücklaufkammer. Gleichzeitig kann es derart ausgestaltet sein, dass es bei einer Drehbewegung des Verteilerkörpers eine Förderwirkung auf das Kühlmittel in Richtung der Kühlmittelrücklaufauslassöffnung ausübt. Vor allem wird jedoch die Rücklaufkammer mithilfe des Strömungsführungselements verkleinert.

Aufgrund der Ausgestaltung des Verteilerkörpers aus zwei Gleichteilen, welche gemeinsam die Rücklaufkammer ausbilden, weist die Rücklaufkammer bei strömungsoptimaler Ausgestaltung ein großes Volumen auf, insbesondere durch eine große Erstreckung in Umfangsrichtung. Diese ist aufgrund der Ausgestaltung der Verteilerkörper aus den beiden Gleichteilen symmetrisch bezüglich einer auf der Längsmittelachse stehenden gedachten Symmetrieebene. Zum Verkleinern der Rücklaufkammer soll das Strömungsführungselement auf gegenüberliegenden Seiten an den Gleichteilen anliegen, sodass es die Rücklaufkammer in zwei Teile aufteilt. Dabei ist das Strömungsführungselement derart angeordnet, dass ein Teil der Rücklaufkammer von den Kühlmittelrücklaufeinlassöffnungen strömungstechnisch separiert ist, also zumindest nicht über den Verteilerkörper mit ihnen in Strömungsverbindung steht. Durch die Verkleinerung des Volumens der Rücklaufkammer wird ein geringerer Druckverlust über die Rücklaufkammer hinweg erzielt.

Schließlich kann im Rahmen einer weiteren bevorzugten Ausgestaltung der Erfindung vorgesehen sein, dass das Strömungsführungselement in Umfangsrichtung gekrümmt ist. In anderen Worten weist das Strömungsführungselement eine Krümmung in Umfangsrichtung auf, welche über das Strömungsführungselement in radialer Richtung hinweg zumindest bereichsweise, besonders bevorzugt durchgehend, von Null verschieden ist. Beispielsweise weist das Strömungsführungselement über seine Erstreckung in radialer Richtung hinweg durchgehend eine konstante, von Null verschiedene Krümmung auf. Es kann jedoch auch vorgesehen sein, dass sich die Krümmung über die Erstreckung des Strömungsführungselements in radialer Richtung verändert, insbesondere kontinuierlich verändert.

Das Strömungsführungselement ist beispielsweise derart gekrümmt, dass es eine Förderwirkung auf das in der Rücklaufkammer vorliegende Kühlmittel im Falle einer Drehbewegung des Verteilerkörpers um seine Drehachse hat. Während der Verteilerkörper eine Drehbewegung beschreibt, wird also das Kühlmittel aus der Rücklaufkammer aufgrund der Krümmung des Strömungsführungselements herausgefördert, nämlich in Richtung der Kühlmittelrücklaufauslassöffnung.

Die Erfindung betrifft weiterhin eine Maschinenanordnung. Diese verfügt über eine erste elektrische Maschine und eine zweite elektrische Maschine, die jeweils eine erste Hohlwelle und eine in die erste Hohlwelle hineinragende zweite Hohlwelle aufweisen, die an einen gemäß den Ausführungen im Rahmen dieser Beschreibung ausgebildeten Kühlmittelverteiler strömungstechnisch angeschlossen sind, wobei jeder der elektrischen Maschine jeweils einen Kühlmittelkanal aufweist, der teilweise in der jeweiligen zweiten Hohlwelle vorliegt und teilweise von einem zwischen einem Innenumfang der jeweiligen ersten Hohlwelle und einem Außenumfang der jeweiligen zweiten Hohlwelle vorliegenden Ringraum gebildet ist.

Auf die Vorteile einer derartigen Ausgestaltung der Maschinenanordnung beziehungsweise des Kühlmittelverteilers wurde bereits hingewiesen. Sowohl die Maschinenanordnung als auch der Kühlmittelverteiler können gemäß den Ausführungen im Rahmen dieser Beschreibung weitergebildet sein, sodass insoweit auf diese verwiesen wird.

Die Maschinenanordnung verfügt über die beiden elektrischen Maschinen, welche jeweils zwei Hohlwellen aufweisen, nämlich die erste Hohlwelle und die zweite Hohlwelle. Insoweit weist die erste elektrische Maschine die erste Hohlwelle und die zweite Hohlwelle und die zweite elektrische Maschine eine weitere erste Hohlwelle und eine weitere zweite Hohlwelle auf. Die erste Hohlwelle stellt bevorzugt eine Antriebswelle der jeweiligen elektrischen Maschine dar, dient also dem Übertragen eines von der jeweiligen elektrischen Maschine bereitgestellten Drehmoments. Die zweite Hohlwelle dient hingegen dem Ausbilden des Kühlmittelkanals und erstreckt sich in die erste Hohlwelle hinein.

Die zweite Hohlwelle ist zwar vorzugsweise drehfest mit der ersten Hohlwelle verbunden, dient jedoch nicht der Übertragung des Drehmoments. Vielmehr endet sie auf ihrer dem Kühlmittelverteiler abgewandten Ende innerhalb der ersten Hohlwelle. Die zweite Hohlwelle liegt somit nach Art einer Kühllanze vor, durch welche Kühlmittel in einen Innenraum der ersten Hohlwelle eingebracht werden kann. Entsprechend verfügt jede der elektrischen Maschinen über einen Kühlmittelkanal, der zum Teil in der jeweiligen zweiten Hohlwelle, also der Kühllanze, vorliegt.

Zu einem anderen Teil liegt der Kühlmittelkanal zwischen dem Innenumfang der ersten Hohlwelle und dem Außenumfang der zweiten Hohlwelle vor, nämlich in dem Ringraum, der durch die Anordnung der zweiten Hohlwelle in der ersten Hohlwelle zwischen ihnen gebildet ist. Bevorzugt wird mittels des Kühlmittelverteilers Kühlmittel in die zweite Hohlwelle eingebracht, durchströmt diese und tritt auf ihrer dem Kühlmittelverteiler abgewandten Seite aus der zweiten Hohlwelle aus. Durch den Ringraum, der zwischen den beiden Hohlwellen vorliegt, strömt das Kühlmittel von dort zurück zu dem Kühlmittelverteiler. Die zweite Hohlwelle ist insoweit strömungstechnisch an eine der Kühlmittelvorlaufauslassöffnungen des Kühlmittelverteilers angeschlossen. Der Ringraum hingegen ist an eine der Kühlmittelrücklaufeinlassöffnungen strömungstechnisch angeschlossen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Maschinenanordnung mit einer ersten elektrischen Maschine und einer zweiten elektrischen Maschine, sowie einem Kühlmittelverteiler zum Verteilen von Kühlmittel auf die beiden elektrischen Maschinen,
- Figur 2: eine schematische Explosionsdarstellung des Kühlmittelverteilers, welcher zumindest zwei Gleichteile und - optional - ein zwischen den Gleichteilen angeordnetes Strömungsführungselement aufweist, sowie
- Figur 3: eine teiltransparente weitere Darstellung des Kühlmittelverteilers.

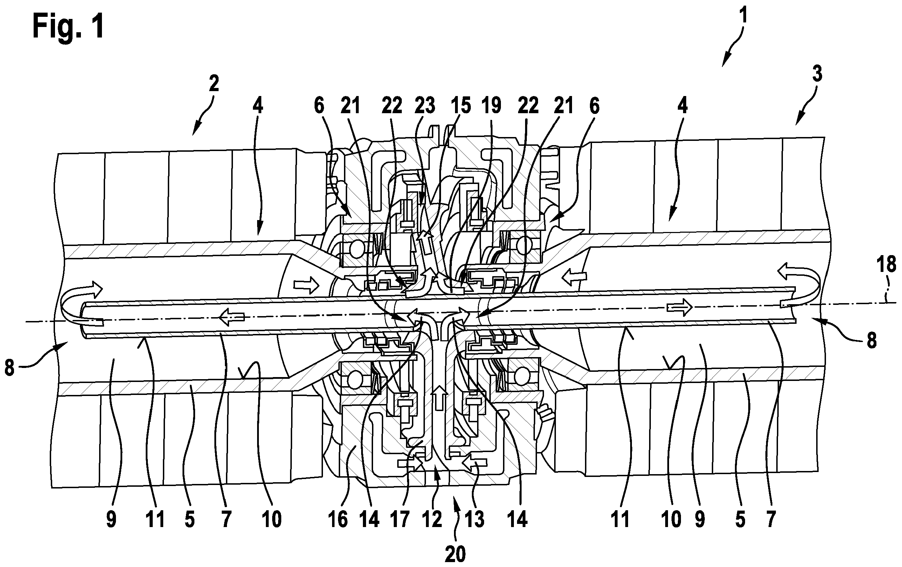

Die Figur 1 zeigt eine schematische Schnittdarstellung einer Maschinenanordnung 1, die über eine erste elektrische Maschine 2 sowie eine zweite elektrische Maschine 3 verfügt. Nachfolgend wird lediglich auf die erste elektrische Maschine 2 eingegangen. Die Ausführungen sind jedoch stets analog auch auf die zweite elektrische Maschine 3 übertragbar. Die elektrische Maschine 2 verfügt über einen Rotor 4, welcher drehfest mit einer ersten Hohlwelle 5 verbunden ist, die auch als Antriebswelle bezeichnet werden kann. Über die erste Hohlwelle 5, welche mittels wenigstens eines Lagers 6 drehbar gelagert ist, kann ein von der elektrischen Maschine 2 bereitgestelltes Drehmoment übertragen werden. Aufgrund des im Wesentlichen identischen Aufbaus der beiden elektrischen Maschinen 2 und 3 sind die einzelnen Elemente der elektrischen Maschinen 2 und 3 mit identischen Bezugszeichen versehen.

In die erste Hohlwelle 5 ragt eine zweite Hohlwelle 7 hinein, welche alternativ auch als Kühllanze bezeichnet werden kann. Die zweite Hohlwelle 7 bildet einen Teil eines Kühlmittelkanals 8. Durch die zweite Hohlwelle 7 kann Kühlmittel hindurchgeführt und in die erste Hohlwelle 5 ausgebracht werden. Zusätzlich zu einem in der zweiten Hohlwelle 7 vorliegenden Teil des Kühlmittelkanals 8 weist der Kühlmittelkanal 8 einen Teil auf, welcher von einem Ringraum 9 gebildet ist, der zwischen einem Innenumfang 10 der ersten Hohlwelle 5 und einem Außenumfang 11 der zweiten Hohlwelle vorliegt.

Um der Maschinenanordnung 1 zugeführtes Kühlmittel auf die beiden elektrischen Maschinen 2 und 3 und mithin in diesen vorliegenden Kühlmittelkanäle 8 aufzuteilen, ist ein Kühlmittelverteiler 12 vorgesehen. Der Kühlmittelverteiler 12 dient dem Aufteilen eines Kühlmittelvorlaufstroms 13 in mehrere Kühlmittelteilströme 14, wobei jedem Kühlmittelkanal 8 ein derartiger Kühlmittelteilstrom 14 zugeführt wird. Nach dem Durchströmen des Kühlmittelkanals 8 werden die Kühlmittelteilströme 14 wieder dem Kühlmittelverteiler 13 zugeführt und von diesem zu einem Kühlmittelrücklaufstrom 15 zusammengefasst und abgeführt. Der Kühlmittelverteiler 12 ist vorzugsweise drehfest mit der ersten Hohlwelle 5 beziehungsweise den ersten Hohlwellen 5 verbunden. Es kann jedoch auch vorgesehen sein, dass der Kühlmittelverteiler 12 bezüglich eines Gehäuses 16 der Maschinenanordnung 1 ortsfest angeordnet ist.

Es ist erkennbar, dass der Kühlmittelverteiler 12 einen Verteilerkörper 17 aufweist, der eine bezüglich einer Längsmittelachse 18 des Verteilerkörpers 17 zentrale Hohlwellendurchtrittsöffnung 19 aufweist, welche von der zweiten Hohlwelle 7 beziehungsweise den zweiten Hohlwellen 7 durchgriffen ist. In dem hier dargestellten Ausführungsbeispiel sind die beiden zweiten Hohlwellen 7 als eine gemeinsame Hohlwelle ausgestaltet und durchgreifen insoweit gemeinsam die Hohlwellendurchtrittsöffnung 19 des Verteilerkörpers 17.

Der Kühlmittelverteiler 12 verfügt über eine Kühlmittelvorlaufeinlassöffnung 20, durch welche Kühlmittel dem Verteilerkörper 17 zugeführt werden kann. Das zugeführte Kühlmittel kann durch mehrere Kühlmittelvorlaufauslassöffnungen 21 in den Kühlmittelkanal 8 gelangen. Nach dessen Durchströmen tritt das Kühlmittel durch Kühlmittelrücklaufeinlassöffnungen 22 wieder in den Verteilerkörper 17 ein und wird in Form des Kühlmittelrücklaufstroms durch eine Kühlmittelrücklaufauslassöffnung 23 aus ihm abgeführt.

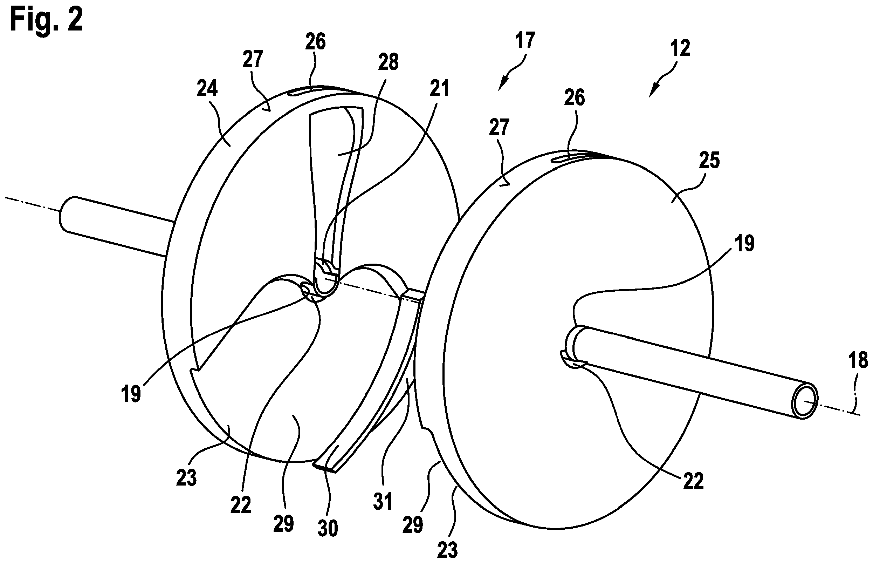

Die Figur 2 zeigt eine Explosionsdarstellung des Kühlmittelverteilers 12. Es ist erkennbar, dass der Verteilerkörper 17 aus zwei Gleichteilen 24 und 25 besteht, welche zur Ausbildung des Verteilerkörpers 17 aneinander befestigt werden, wobei sie vorzugsweise in einer senkrecht auf der Längsmittelachse 18 stehenden Kontaktebene in flächigem Anlagekontakt stehen. Die Kühlmittelvorlaufeinlassöffnung 20 setzt sich aus zwei Kühlmittelvorlaufeinlassöffnungsteilen 26 zusammen, welche in axialer Richtung beabstandet voneinander sowie randgeschlossen in den Gleichteilen 24 und 25 ausgebildet sind. Die Kühlmittelvorlaufeinlassöffnungsteile 26 durchgreifen hierbei eine Mantelfläche 27 des jeweiligen Gleichteils 24 beziehungsweise 25.

Die Kühlmittelvorlaufeinlassöffnung 20 beziehungsweise ihre Kühlmittelvorlaufeinlassöffnungsteile 26 sind über eine Vorlaufkammer 28 strömungstechnisch mit den Kühlmittelvorlaufauslassöffnungen 21 verbunden. Die Kühlmittelrücklaufeinlassöffnungen 22 sind an die Hohlwellendurchtrittsöffnung 19 unmittelbar anschließend und randoffen zu dieser ausgebildet. Sie münden in eine Rücklaufkammer 29 ein, über welche sie mit der Kühlmittelrücklaufauslassöffnung 23 in Strömungsverbindung stehen. Insbesondere wird die Kühlmittelrücklaufauslassöffnung 23 durch ein Durchgreifen der Mantelfläche 27 durch die Rücklaufkammer 29 ausgebildet.

Aufgrund der Ausgestaltung des Kühlmittelverteilers 12 aus Gleichteilen 24 und 25 ist die Rücklaufkammer 29 hinsichtlich ihres Strömungsvolumens sehr groß ausgestaltet. Aus diesem Grund ist in der Rücklaufkammer 29 ein Strömungsführungselement 30 angeordnet, welches bevorzugt aus einem Material besteht, welches von dem Material der Gleichteile 24 und 25 verschieden ist. Das Strömungsführungselement 30 stützt sich in axialer Richtung gesehen einerseits an dem Gleichteil 24 und andererseits an dem Gleichteil 25 ab.

Das Strömungsführungselement 30 ist derart in der Rücklaufkammer 29 angeordnet, dass ein Teil 31 der Rücklaufkammer 29 von den Kühlmittelrücklaufeinlassöffnungen 22 separiert ist. Das Strömungsführungselement 30 grenzt diese also gegenüber dem Teil der Rücklaufkammer 29 strömungstechnisch ab. Zudem ist das Strömungsführungselement 30 in Umfangsrichtung gekrümmt. Mit einer solchen Ausgestaltung wird eine Förderwirkung auf das Kühlmittel ausgeübt, nämlich während eines Betriebs der Maschinenanordnung 1, während welchem der Verteilerkörper 17 beziehungsweise der Kühlmittelverteiler 12 um die Längsmittelachse 18 rotiert.

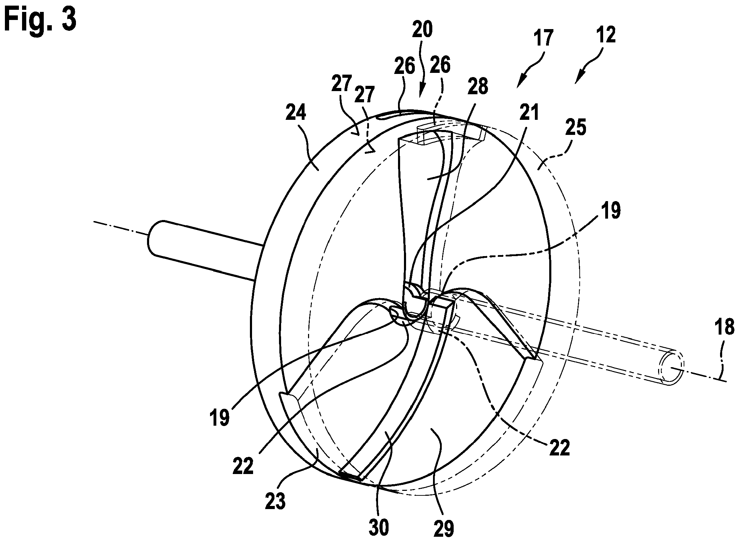

Die Figur 3 zeigt eine teiltransparente Darstellung des Kühlmittelverteilers 12. Es wird deutlich, dass die beiden Gleichteile 24 und 25 vollständig identisch ausgestaltet sind und nach ihrem Zusammenfügen zu dem Verteilerkörper 17 in einer gedachten Ebene, nämlich einer Kontaktebene, flächig aneinander anliegen.

Die hier dargestellte Ausgestaltung der Maschinenanordnung 1 beziehungsweise des Kühlmittelverteilers 12 hat den Vorteil, dass sie zum einen einfach und kostengünstig herstellbar ist und zum anderen eine hervorragende Strömungsführung des Kühlmittels umsetzt, sodass bei einer Durchströmung mit Kühlmittel lediglich geringe Druckverluste auftreten.

## Patentansprüche

1. Kühlmittelverteiler (12) für eine Maschinenanordnung (1), wobei in einem Verteilerkörper (17) des Kühlmittelverteilers (12) wenigstens eine Kühlmittelvorlaufeinlassöffnung (20) zum Zuführen eines Kühlmittelvorlaufstroms (13) und wenigstens eine Kühlmittelrücklaufauslassöffnung (23) zum Austragen eines Kühlmittelrücklaufstroms (15) sowie mehrere Kühlmittelvorlaufauslassöffnungen (21) und mehrere Kühlmittelrücklaufeinlassöffnungen (22) ausgebildet sind, wobei die Kühlmittelvorlaufeinlassöffnung (20) über eine in dem Verteilerkörper (17) vorliegende Vorlaufkammer (28) an die Kühlmittelvorlaufauslassöffnungen (21) und die Kühlmittelrücklaufeinlassöffnungen (22) über eine Rücklaufkammer (29) an die Kühlmittelrücklaufauslassöffnung (23) strömungstechnisch angeschlossen sind und die Kühlmittelvorlaufeinlassöffnung (20) innerhalb des Verteilerkörpers (17) strömungstechnisch von der Kühlmittelrücklaufauslassöffnung (23) strömungstechnisch separiert ist, sodass der Kühlmittelvorlaufstrom (13) innerhalb des Verteilerkörpers (17) auf mehrere Kühlmittelteilströme (14) aufgeteilt wird, die den Kühlmittelvorlaufauslassöffnungen (21) zugeführt werden und dass dem Verteilerkörper (17) über die Kühlmittelrücklaufeinlassöffnungen (22) zugeführte Kühlmittelteilströme (14) innerhalb des Verteilerkörpers (17) zu dem Kühlmittelrücklaufstrom (15) zusammengefasst werden, **dadurch gekennzeichnet, dass** der Verteilerkörper (17) aus zwei Gleichteilen (24,25) zusammengesetzt ist, die die Vorlaufkammer (28) und die Rücklaufkammer (29) zwischen sich ausbilden.

2. Kühlmittelverteiler nach Anspruch 1, **dadurch gekennzeichnet, dass** der Verteilerkörper (17) eine bezüglich einer Längsmittelachse (18) des Verteilerkörpers (17) zentrale Hohlwellendurchtrittsöffnung (19) aufweist, an die sich in radialer Richtung nach außen die Kühlmittelrücklaufeinlassöffnungen (22) anschließen.

3. Kühlmittelverteiler nach einem der vorhergehenden Ansprüche, **dadurch gekennzeichnet, dass** die Kühlmittelrücklaufeinlassöffnungen (22) in Umfangsrichtung bezüglich der Längsmittelachse (18) des Verteilerkörpers (17) jeweils beidseitig begrenzt sind.

4. Kühlmittelverteiler nach einem der vorhergehenden Ansprüche, **dadurch gekennzeichnet, dass** die Kühlmittelrücklaufeinlassöffnungen (22) in unterschiedlichen der Gleichteile (24,25) ausgebildet sind.

5. Kühlmittelverteiler nach einem der vorhergehenden Ansprüche, **dadurch gekennzeichnet, dass** die Kühlmittelvorlaufeinlassöffnung (20) sich aus mehreren Kühlmittelvorlaufeinlassöffnungsteilen (26) zusammensetzt, die beabstandet voneinander in unterschiedlichen der Gleichteile (24,25) jeweils randgeschlossen ausgebildet sind, wobei die Kühlmittelvorlaufeinlassöffnungsteile (26) Mantelflächen (27) der Gleichteile (24,25) durchgreifen.

6. Kühlmittelverteiler nach einem der vorhergehenden Ansprüche, **dadurch gekennzeichnet, dass** die Kühlmittelrücklaufauslassöffnung (23) in axialer Richtung gesehen zwischen den Kühlmittelvorlaufeinlassöffnungsteilen (26) angeordnet ist und jeweils teilweise in den Gleichteilen (24,25) randoffen ausgebildet ist, wobei die Kühlmittelrücklaufauslassöffnung (23) die Mantelflächen (27) der Gleichteile (24,25) durchgreift.

7. Kühlmittelverteiler nach einem der vorhergehenden Ansprüche, **dadurch gekennzeichnet, dass** die Rücklaufkammer (29) sich im radialen Verlauf ausgehend von den Kühlmittelrücklaufeinlassöffnungen (22) hin zu der Kühlmittelrücklaufauslassöffnung (23) in Umfangsrichtung aufweitet.

8. Kühlmittelverteiler nach einem der vorhergehenden Ansprüche, **dadurch gekennzeichnet, dass** in der Rücklaufkammer (29) ein Strömungsführungselement (30) angeordnet ist, das in axialer Richtung an beiden Gleichteilen (24,25) anliegt und sich von den Kühlmittelrücklaufeinlassöffnungen (22) bis hin zu der Kühlmittelrücklaufauslassöffnung (23) erstreckt, sodass ein Teil (31) der Rücklaufkammer (29) strömungstechnisch von den Kühlmittelrücklaufeinlassöffnungen (22) separiert ist.

9. Kühlmittelverteiler nach einem der vorhergehenden Ansprüche, **dadurch gekennzeichnet, dass** das Strömungsführungselement (30) in Umfangsrichtung gekrümmt ist.

10. Maschinenanordnung (1), mit einer ersten elektrischen Maschine (2) und einer zweiten elektrischen Maschine (3), die jeweils eine erste Hohlwelle (5) und eine in die erste Hohlwelle (5) hineinragende zweite Hohlwelle (7) aufweisen, wobei jede der elektrischen Maschinen (2,3) jeweils einen Kühlmittelkanal (8) aufweist, der teilweise in der jeweiligen zweiten Hohlwelle (7) vorliegt und teilweise von einem zwischen einem Innenumfang (10) der jeweiligen ersten Hohlwelle (5) und einem Außenumfang (11) der jeweiligen zweiten Hohlwelle (7) vorliegenden Ringraum (9) gebildet ist, **dadurch gekennzeichnet, dass** die die erste Hohlwelle (5) und die zweite Hohlwelle (7) an einen nach einem oder mehreren der vorhergehenden Ansprüche ausgebildeten Kühlmittelverteiler (12) strömungstechnisch angeschlossen sind.

## Claims

1. Coolant distributor (12) for a machine assembly (1), wherein at least one coolant forward flow inlet opening (20) for supplying a coolant forward flow (13) and at least one coolant return flow outlet opening (23) for discharging a coolant return flow (15) as well as multiple coolant forward flow outlet openings (21) and multiple coolant return flow inlet openings (22) are formed in a distributor body (17) of the coolant distributor (12), wherein the coolant forward flow inlet opening (20) is fluidically connected by way of a forward flow chamber (28) present in the distributor body (17) to the coolant forward flow outlet openings (21), and the coolant return flow inlet openings (22) are fluidically connected by way of a return flow chamber (29) to the coolant return flow outlet opening (23), and the coolant forward flow inlet opening (20) is fluidically separated within the distributor body (17) from the coolant return flow outlet opening (23), such that the coolant forward flow (13) is divided within the distributor body (17) into multiple coolant partial flows (14) which are supplied to the coolant forward flow outlet openings (21) and coolant partial flows (14) supplied to the distributor body (17) by way of the coolant return flow inlet openings (22) are combined within the distributor body (17) to form the coolant return flow (15), **characterised in that** the distributor body (17) is composed of two identical parts (24, 25), which form the forward flow chamber (28) and the return flow chamber (29) between them.

2. Coolant distributor according to claim 1, **characterised in that** the distributor body (17) has a hollow shaft passage opening (19) which is central with respect to a longitudinal central axis (18) of the distributor body (17), to which hollow shaft passage opening the coolant return flow inlet openings (22) are connected on the outside in the radial direction.

3. Coolant distributor according to any of the preceding claims, **characterised in that** the coolant return flow inlet openings (22) are bounded on both sides in the circumferential direction with respect to the longitudinal central axis (18) of the distributor body (17).

4. Coolant distributor according to any of the preceding claims, **characterised in that** the coolant return flow inlet openings (22) are formed in different identical parts (24, 25).

5. Coolant distributor according to any of the preceding claims, **characterised in that** the coolant forward flow inlet opening (20) is composed of multiple coolant forward flow inlet opening portions (26), which are each closed-edged at a spacing from one another in different identical parts (24, 25), wherein the coolant forward flow inlet opening portions (26) pass through lateral surfaces (27) of the identical parts (24, 25).

6. Coolant distributor according to any of the preceding claims, **characterised in that** the coolant return flow outlet opening (23), viewed in the axial direction, is arranged between the coolant forward flow inlet opening portions (26), and is in each case partially open-edged in the identical parts (24, 25), wherein the coolant return flow outlet opening (23) passes through the lateral surfaces (27) of the identical parts (24, 25).

7. Coolant distributor according to any of the preceding claims, **characterised in that** the return flow chamber (29) widens out in its radial course in the circumferential direction, starting from the coolant return flow inlet openings (22), to the coolant return flow outlet opening (23).

8. Coolant distributor according to any of the preceding claims, **characterised in that** a flow guidance element (30) is arranged in the return flow chamber (29), and rests against both identical parts (24, 25) in the axial direction and extends from the coolant return flow inlet openings (22) up to the coolant return flow outlet opening (23), such that a portion (31) of the return flow chamber (29) is fluidically separated from the coolant return flow inlet openings (22).

9. Coolant distributor according to any of the preceding claims, **characterised in that** the flow guidance element (30) is curved in the circumferential direction.

10. Machine assembly (1), having a first electric machine (2) and a second electric machine (3), each having a first hollow shaft (5) and a second hollow shaft (7) protruding into the first hollow shaft (5), wherein each of the electric machines (2, 3) has a coolant duct (8) that is present partially in the respective second hollow shaft (7) and formed partially by an annular space (9) present between an inner circumference (10) of the respective first hollow shaft (5) and an outer circumference (11) of the respective second hollow shaft (7), **characterised in that** the first hollow shaft (5) and the second hollow shaft (7) are fluidically connected to a coolant distributor (12) designed according to one or more of the preceding claims.

## Revendications

1. Distributeur de liquide de refroidissement (12) pour un agencement de moteur (1), dans lequel au moins une ouverture d'admission d'écoulement de liquide de refroidissement (20) pour amener un écoulement de liquide de refroidissement (13) et au moins une ouverture de sortie de retour de liquide de refroidissement (23) pour évacuer un écoulement de retour de liquide de refroidissement (15) ainsi que plusieurs ouvertures de sortie d'écoulement de liquide de refroidissement (21) et plusieurs ouvertures d'admission de retour de liquide de refroidissement (22) sont réalisées dans un corps de distributeur (17) du distributeur de liquide de refroidissement (12), dans lequel l'ouverture d'admission d'écoulement de liquide de refroidissement (20) est raccordée fluidiquement aux ouvertures de sortie d'écoulement de liquide de refroidissement (21) via une chambre d'écoulement (28) présente dans le corps de distributeur (17) et les ouvertures d'admission de retour de liquide de refroidissement (22) à l'ouverture de sortie de retour de liquide de refroidissement (23) via une chambre de retour (29) et l'ouverture d'admission d'écoulement de liquide de refroidissement (20) dans le corps de distributeur (17) est séparé fluidiquement de l'ouverture de sortie de retour de liquide de refroidissement (23) de sorte que le flux d'alimentation en liquide de refroidissement (13) au sein du corps du distributeur (17) est réparti en plusieurs flux partiels de liquide de refroidissement (14) qui sont amenés aux ouvertures de sortie d'écoulement de liquide de refroidissement (21) et de sorte que les flux partiels de liquide de refroidissement (14) amenés au corps de distributeur (17) via les ouvertures d'admission de retour de liquide de refroidissement (22) sont regroupés au sein du corps de distributeur (17) pour former le flux de retour de liquide de refroidissement (15), **caractérisé en ce que** le corps de distributeur (17) est composé de deux parties invariantes (24, 25) qui réalisent entre elles la chambre d'écoulement (28) et la chambre de retour (29).

2. Distributeur de liquide de refroidissement selon la revendication 1, **caractérisé en ce que** le corps de distributeur (17) présente une ouverture de passage d'arbre creux (19) centrale par rapport à un axe longitudinal médian (18) du corps de distributeur (17) à laquelle les ouvertures d'admission de retour de liquide de refroidissement (22) se raccordent dans une direction radiale vers l'extérieur.

3. Distributeur de liquide de refroidissement selon l'une quelconque des revendications précédentes, **caractérisé en ce que** les ouvertures d'admission de retour de liquide de refroidissement (22) sont limitées respectivement des deux côtés dans une direction circonférentielle par rapport à l'axe longitudinal médian (18) du corps de distributeur (17).

4. Distributeur de liquide de refroidissement selon l'une quelconque des revendications précédentes, **caractérisée en ce que** les ouvertures d'admission de retour de liquide de refroidissement (22) sont réalisées dans différentes parties invariantes (24, 25).

5. Distributeur de liquide de refroidissement selon l'une quelconque des revendications précédentes, **caractérisé en ce que** l'ouverture d'admission d'écoulement de liquide de refroidissement (20) se compose de plusieurs parties d'ouverture d'admission d'écoulement de liquide de refroidissement (26) qui sont réalisées à distance les unes des autres dans différentes parties invariantes (24, 25), respectivement fermées par un bord, dans lequel les parties d'ouverture d'admission d'écoulement de liquide de refroidissement (26) traversent des surfaces enveloppantes (27) des parties invariantes (24, 25).

6. Distributeur de liquide de refroidissement selon l'une quelconque des revendications précédentes, **caractérisé en ce que** l'ouverture de sortie de retour de liquide de refroidissement (23) est agencée entre les parties d'ouverture d'admission d'écoulement de liquide de refroidissement (26), vue dans la direction axiale, et est réalisée respectivement partiellement avec un bord ouvert dans les parties invariantes (24, 25), dans lequel l'ouverture de sortie de retour de liquide de refroidissement (23) traverse les surfaces enveloppantes (27) des parties invariantes (24, 25).

7. Distributeur de liquide de refroidissement selon l'une quelconque des revendications précédentes, **caractérisé en ce que** la chambre de retour (29) se déploie dans la direction circonférentielle en partant des ouvertures d'admission de retour de liquide de refroidissement (22) vers l'ouverture de sortie de retour de liquide de refroidissement (23).

8. Distributeur de liquide de refroidissement selon l'une quelconque des revendications précédentes, **caractérisé en ce qu'**un élément de guidage de flux (30) est agencé dans la chambre de retour (29), lequel s'appuie dans la direction axiale contre les deux parties invariantes (24, 25) et s'étend des ouvertures d'admission de retour de liquide de refroidissement (22) jusqu'à l'ouverture de sortie de retour de liquide de refroidissement (23), de sorte qu'une partie (31) de la chambre de retour (29) est séparée fluidiquement des ouvertures d'admission de retour de liquide de refroidissement (22).

9. Distributeur de liquide de refroidissement selon l'une quelconque des revendications précédentes, **caractérisé en ce que** l'élément de guidage de flux (30) est courbe dans la direction circonférentielle.

10. Agencement de moteur (1), avec une première machine électrique (2) et une seconde machine électrique (3), qui présentent respectivement un premier arbre creux (5) et un second arbre creux (7) s'emboîtant dans le premier arbre creux (5), dans lequel chacune des machines électriques (2, 3) présente un canal de liquide de refroidissement (8), qui est partiellement présent dans le second arbre creux (7) respectif et partiellement formé par un espace annulaire (9) présent entre une circonférence intérieure (10) du premier arbre creux (5) respectif et une circonférence extérieure (11) du second arbre creux (7) respectif, **caractérisé en ce que** le premier arbre creux (5) et le second arbre creux (7) sont raccordés fluidiquement à un distributeur de liquide de refroidissement (12) réalisé selon une ou plusieurs des revendications précédentes.
